Europäisches Patentamt

European Patent Office

Office européen des brevets

(19)

(11) Publication number: **0 337 732**
**A1**

## EUROPEAN PATENT APPLICATION

(12)

(21) Application number: **89303569.1**

(22) Date of filing: **11.04.89**

(51) Int. Cl.⁴: **C 22 C 1/09**

(30) Priority: **15.04.88 JP 91251/88**

(43) Date of publication of application:
**18.10.89 Bulletin 89/42**

(84) Designated Contracting States: **DE FR GB IT**

(71) Applicant: **UBE INDUSTRIES, LTD.**
**12-32, Nishihonmachi 1-chome**
**Ube-shi, Yamaguchi-ken 755 (JP)**

(72) Inventor: **Tokuse, Masahiro**
**2-4-8 Minamiobayama-cho**
**Ube-shi Yamaguchi (JP)**

**Shimizu, Katzutoshi**
**968 Kagawa**
**Yamaguchi-shi Yamaguchi (JP)**

**Waku, Yoshiharu**
**8-1 Higashiobayama-cho 2-chome**
**Ube-shi Yamaguchi (JP)**

**Kohtoku, Yasuhiko**
**4-3-11 Kitasakoshinmachi**
**Ube-shi Yamaguchi (JP)**

**Wakamoto, Takumi**
**2015 Higashisue**
**Ube-shi Yamaguchi (JP)**

**Masunaga, Katsuro**
**1-9-20 Nonaka**
**Ube-shi Yamaguchi (JP)**

(74) Representative: **Fisher, Bernard et al**
**Raworth, Moss & Cook 36 Sydenham Road**
**Croydon Surrey CR0 2EF (GB)**

(54) Production of beta-type silicon nitride reinforced metal matrix composite.

(57) A β-type silicon nitride reinforce metal composite material is produced by impregnating a molten metal matrix into a β-type silicon nitride whisker molding under a pressure followed by solidifying in which a β-type silicon whisker molding has a density of 0.15 to 1.1 g/cm³, a flexural strength of 25 kg/cm² or more, a hardness of 45 kg/cm² or more and a compression strength of 30 kg/cm² or more, the molding comprising 90% by weight or more of β-type silicon nitride whiskers wherein 80% by weight or more of the whiskers have a diameter of 0.1 to 5 μm and a length of 2 to 100 μm and the whiskers are mutually fixed to each other by contact therebetween at one or more site per whisker.

Fig.1

EP 0 337 732 A1

## Description

### PRODUCTION OF β-TYPE SILICON NITRIDE REINFORCED METAL MATRIX COMPOSITE

### BACKGROUND OF THE INVENTION

1. Field of the Invention

The present invention relates to a process for the production of a metal matrix composite reinforced with β-type silicon nitride whiskers. More specifically, it relates to a process for the production of a metal matrix composite by using a specific β-type silicon nitride whisker molding (i.e., molded product).

2. Description of the Related Art

As the ceramic whisker reinforced metal composite material, aluminum alloys using silicon carbide whiskers or silicon nitride whiskers as the reinforcing material have been intensively investigated, and thus materials with a high strength, modulus, and abrasion resistance are under development.

In connection with the above, methods have been developed of forming a composite of whiskers and a metallic material, primarily based on the high pressure casting process and the powder metallurgy process, and it is considered that the high pressure casting process is the most practical method, from the view point of productivity.

In the high pressure casting process, a composite of whiskers and a matrix metal is usually formed by uniformly separating whiskers to be used as the reinforcing material, forming the whiskers into a preform by mixing with a binder, to obtain a predetermined shape and content, and then impregnating the preform under a pressure with a metal such as aluminum, which becomes the matrix, in the molten state. The binder is used to maintain the strength of the preform.

As the process for forming the preform as disclosed, for example, in Japanese Unexamined Patent Publication (Kokai) No. 59-226139, a process has been employed in which whiskers obtained by a calcination of a starting material are dispersed in a solvent such as water, a binder is added to the dispersion, if necessary, and the dispersion is then placed in a mold having a desired shape and liquid is removed under a pressure or a vacuum.

In the above process, since the whiskers are once molded into a preform, they must be dispersed in a solvent, which is expensive and is a cause of the high production costs of a whisker reinforced metal composite material. Also, in the above process, since the whiskers are dispersed and separated in a solvent, the whiskers in the obtained preform may be damaged or broken. Accordingly, a serious problem arises in that the metal composite material obtained by using the above preform has a low strength at a high temperature.

Further, the preform obtained by the above process will retain its shape as long as a high external force is not applied, namely during storage thereof or during arrangement within a mold, but when the molten matrix metal is poured onto the preform arranged within a mold and the molten metal is solidified under a high pressure in the mold, a pressure of about 400 to 1000 $kg/cm^2$ is usually applied, and thus the preform may be shrunk or deformed. Particularly, this occurs when a preform has a low volume fraction.

Accordingly, in the process for the production of a metal matrix composite by high pressure casting, using a preform obtained by the known process, it is difficult to set the whiskers at a desired volume fraction, and particularly, when a low volume fraction is desired, special measures must be taken. Also, it may be necessary to remove by mechanical working a portion of the metal matrix composite in which the whiskers are not uniformly dispersed, but a mechanical working of a ceramic whisker reinforced metal matrix composite is extremely difficult compared with the working of the matrix metal, and thus a drawback is found in that the working costs are greatly increased.

### SUMMARY OF THE INVENTION

Accordingly, an object of the present invention is to solve the above-mentioned problems of the prior art and to provide a process for the production of a β-type silicon nitride whisker reinforced metal composite material in which the problems of the prior art are eliminated.

Other objects and advantages of the present invention will be apparent from the following description.

In accordance with the present invention, there is provided a process for preparing a β-type silicon nitride whisker reinforced metal composite material, which comprises impregnating a molten metal matrix under a pressurize followed by solidifying into a β-type silicon nitride whisker molding having a density of 0.15 to 1.1 $g/cm^3$, a flexural strength of 25 $kg/cm^2$ or more, a hardness of 45 $kg/cm^2$ or more, and a compression strength of 30 $kg/cm^2$ or more, the molding comprising 90% by weight or more of β-type silicon nitride whiskers, wherein 80% by weight or more of the whiskers have a diameter of 0.1 to 5 $\mu m$ and a length of 2 to 100 $\mu m$, and the whiskers are fixed to each other by contact therebetween at one or more site per one whisker.

The flexural strength, hardness, and compression strength of the β-type silicon nitride whisker molding used in the present invention are measured according to JIS Z2113, JIS Z2117 and JIS Z2111, respectively.

### BRIEF DESCRIPTION OF THE DRAWINGS

The present invention will be better understood from the description set forth below with reference to the drawings in which:

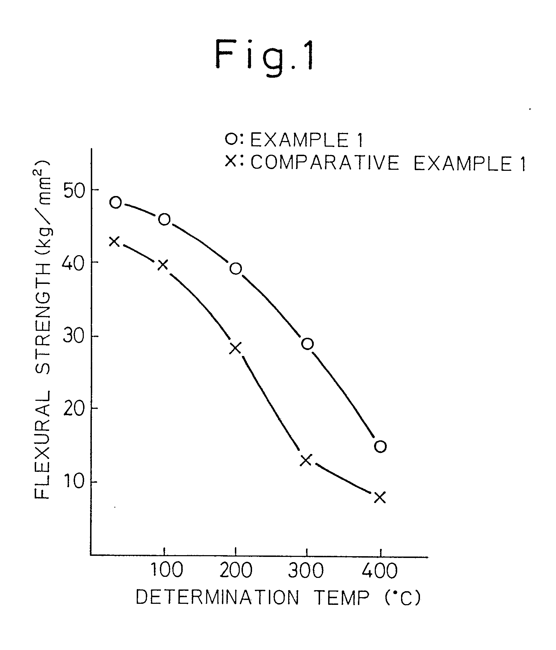

Figure 1 is a graph showing the flexural strengths of the β-type silicon nitride whisker reinforced aluminum composite materials obtained in Example 1 and Comparative Example 1; and Fig. 2 and Fig. 3 are sectional views of the composite material obtained in Example 1 and Comparative Example 1, respectively. In Fig. 2 and Fig. 3, the hatched portion contains the β-type silicon nitride whiskers, and the blank portion does not contain the β-type silicon nitride whiskers.

## DESCRIPTION OF THE PREFERRED EMBODIMENT

The β-type silicon nitride type whisker molding of the present invention has a density of 0.15 to 1.1 g/cm$^3$, a flexural strength of 25 kg/cm$^2$ or more, a hardness of 45 kg/cm$^2$ or more, and a compression strength of 30 kg/cm$^2$ or more. Also, the above molding comprises 90% by weight or more of β-type silicon nitride whiskers, wherein 80% or more of the above β-type silicon nitride whiskers have a diameter of 0.1 to 5 μm and a length of 2 to 100 μm. These β-type silicon nitride whiskers are fixed to each other by contact therebetween at one or more site per one whisker, to thereby form a firm molding.

The β-type silicon nitride whisker molding usable in the present invention can be prepared by, for example, formulating amorphous silicon nitride powder and/or τ-type silicon nitride powder with oxide powder of a rare earth element and/or alkaline earth metal, and calcining the formulated product filled in a calcining vessel at a filling density of 0.15 to 1.1 g/cm$^3$, by heating under a nitrogen-containing non-oxidative gas atmosphere.

The amorphous silicon nitride powder can be prepared by a method known per se, for example, by subjecting a reaction product obtained by the reaction of silicon tetrahalide and ammonia in a liquid phase or gas phase to a heat treatment, to produce an amorphous substance which does not exhibit a clear diffraction phenomenon during a usual X-ray diffraction measurement.

The α-type silicon nitride powder can be prepared by calcining amorphous silicon nitride powder obtained by the above-mentioned method, or other known methods such as a reductive nitrification of silica or a direct nitrification of silicon. Preferably, the α-type silicon nitride powder has a specific surface area of 0.01 to 20 m$^2$/g, more preferably 2 to 13 m$^2$/g.

Typical examples of the rare earth element are lanthanum series elements such as yttrium, lanthanum, cerium, praseodium, neodium, samarium, europium, gadlinium, dysprosium, yttribium, and scandium.

Typical examples of the alkaline earth metal are magnesium, calcium, strontium, and barium.

It is also possible to use a compound which can be converted to the oxide of a rare earth element and/or alkaline earth metal in place of the above oxides. For example, any compound which can be partially or wholly converted to an oxide during the growth of the α, β-type silicon nitride whisker may be used, including, for example, hydroxides and carbonates.

The amount of the oxide of a rare earth element and/or alkaline earth metal formulated may be 0.1 to 20 parts by weight, in terms of oxide, per 100 parts by weight of the starting material powder selected from amorphous silicon nitride and/or α-type silicon nitride. If the formulated amount is less than the lower limit, the formation of whiskers is unsatisfactory, and if the formulation amount is higher than the upper limit, the whiskers cannot be molded and only an unsatisfactory preform for a composite material can be obtained.

The method of preparing the powdery mixture of the amorphous silicon nitride and/or α-type silicon nitride powder and the oxide powder of rare earth element and/or alkaline earth metal is not particularly limited, but a method known per se is preferably employed; for example, the method in which both are dry blended or the method in which both are wet blended in an inert liquid followed by removal of the inert liquid. As the mixing device preferably a V-type mixer, ball mill or vibrating ball mill is used. As an alternative method of preparation of the above mixture, the method in which the rare earth metal compound is mixed and dispersed in a precursor of amorphous silicon nitride powder, such as silicon diimide or silicon tetraimide, and the dispersion is subjected to a heat treatment, can be used. In the above preparation methods, when an amorphous silicon nitride or a precursor thereof is used, since these are extremely sensitive to oxygen or water, they must be handled under a controlled inert atmosphere.

Typical examples of the non-oxidative gas include nitrogen, argon, ammonia or a gas mixture thereof. The calcination conditions are preferably such that the temperature of the powdery mixture is elevated from 1000°C to the maximum temperature, over 0.1 to 40 hours, preferably 4 to 20 hours, on average. The maximum calcination temperature is preferably 1850°C or lower, more preferably from 1600 to 1800°C. The furnace to be used during calcination of the powdery mixture is not particularly limited but, for example, a batch system furnace using high frequency induction heating or resistance heating, a rotary furnace or a pusher furnace, may be employed.

Subsequently, the β-type silicon nitride whisker molding as specified in the present invention is arranged within a mold, a molten matrix metal is poured thereon, and the molten metal is solidified in the mold under a pressure, whereby a whisker reinforced metal composite material is obtained.

The β-type silicon nitride whisker molding, according to a customary procedure, are preferably preheated to a temperature of from 200 to 1500°C, prior to arrangement in a mold.

As the matrix metal, aluminum, magnesium, zinc, copper, nickel, iron, titanium or alloys based thereon are preferably used. As alloys with relatively lower melting points, alloys of aluminum with silicon, iron, copper, manganese, magnesium, chromium, zinc, titanium, nickel, lead, and tin or alloys of magnesium with aluminum, zinc, manganese, zirconium, rare earth element or thorium may be employed. Examples of alloys with high melting points include alloys of titanium with aluminum, tin, manganese, iron, chromium, molybdenum, and vanadium.

The proportion of the β-type silicon nitride whisker molding in the metal composite material is preferably 5 to 50% by volume. If the proportion is excessively low, a composite material having high mechanical characteristics cannot be obtained, and if the proportion is made excessively high, wetting of the whisker molding with the matrix metal may be unsatisfactory, or the molten metal can pass through the whisker molding only with difficulty, and thus a satisfactory composite material cannot be detained.

The β-type silicon nitride whisker reinforced metal composite material obtained in the present invention has greatly improved mechanical characteristics at a high temperature, particularly at temperatures of 200°C or higher, compared with the known ceramic whisker reinforced metal composite material.

For example, in an aluminum composite material in which the proportion of the β-type silicone nitride whiskers in the composite material is 10% by volume, the flexural strength at 200°C or higher is higher than the known aluminum composite material, and further, the strength retentivity at a high temperature is improved.

Also, when the β-type silicon nitride is prepared by the method described above, a preform of a desired shape can be formed while using whiskers formed by calcination as such or with a little molding working. Accordingly, the step of forming the whiskers after separation, usually required in the formation of the whisker preform, can be omitted, and thus the strength of the composite material can be improved and the production cost can be greatly reduced.

EXAMPLES

The present invention is now described with reference to the following Examples.

Example 1

An amount of 100 parts by weight of an amorphous silicon nitride powder obtained by a heat decomposition of silicon diimide at 1200°C and 1 part by weight of yttrium oxide having a 99.9% purity were mixed in a vibrating ball mill under a nitrogen atmosphere for 1 hour.

The powdery mixture was filled at a filling density of 0.2 $g/cm^3$ in a bottomed cylindrical carbon vessel having an inner diameter of 15 mm and a length of 200 mm, and the vessel was set in an electric furnace and calcined under a nitrogen gas atmosphere at 1750°C.

After cooling to room temperature, a rod-shaped β-type silicon nitride preform with a diameter of 15 mm and a length of 100 mm was taken out of the vessel.

The rod-shaped product had a density of about 0.32 $g/cm^3$, a flexural strength of 40.5 $kg/cm^2$, a hardness of 69.5 $kg/cm^2$, and a compression strength of 46.2 $kg/cm^2$. When the rod-shaped product was observed by a scanning electron microscope, an image of a complex entanglement of whiskers primarily having lengths of 5 to 100 μm and diameters of 0.2 to 4μm, in which the whiskers were fixed to each other at one or more site per one whisker, was observed.

Also, when the powder obtained by pulverization of the above plate specimen was examined by X-ray diffraction, substantially no diffraction other than that attributable to the β-type silicon nitride was observed.

The above preform was then preheated to 600°C, arranged in a mold, and a molten matrix aluminum (A1070) heated to 770°C was injected into the mold and solidified under a pressure of 1000 $kg/cm^2$, to prepare a whisker reinforce aluminum matrix composite 15 mm in diameter and 100 mm in length. The volume content of the β-type silicon nitride whisker in the composite material was 10%, and no change was observed after casting.

From the above composite material, a test strip 4 x 3 x 40 mm in length was cut out and a three-point flexural test was conducted at a temperature of from room temperature to 400°C under the conditions of a span of 30 mm and a cross-head speed of 0.5 mm/min. The results are shown in Fig. 1. Also, when the distribution of the preform was examined by cutting the composite material at the center thereof, the whiskers were observed to be uniformly distributed throughout the composite material, as shown in Fig. 2.

Example 2

An amount of 120 parts by weight of α-type silicon nitride powder with a specific surface area of 4.8 $m^2/g$, 3.6 parts by weight of calcium oxide, and 600 parts by weight of ethanol were placed in a ball mill, wet blended and dried under a reduced pressure, followed by pulverization of the obtained mass, to give a powdery mixture.

The powdery mixture was filled at a filling density of 0.35 $g/cm^3$ in a cylindrical carbon vessel with an inner diameter of 50 mm and a height of 30 mm. The vessel was set in an electric furnace, and then calcined under a nitrogen gas atmosphere at 1750°C to obtain a preform of β-type silicon nitride whiskers having a disc-shape corresponding to the shape of the above vessel.

The disc-shaped product had a density of 0.36 $g/cm^3$, a flexural strength of 42.0 $kg/cm^2$, a hardness of 72.3 $kg/cm^2$, and a compression strength of 50.4 $kg/cm^2$. When the preform obtained was observed by a scanning electron microscope, an image of a complex entanglement between whiskers primarily having lengths of 10 to 100 μm and diameters of 0.5 to 0.7 μm was seen.

By using the above disc-shaped preform, a composite material of a magnesium alloy (AM100) as the matrix was prepared as described in Example 1. The mold was preheated to 400°C, and the temperature of the molten magnesium alloy was made 730°C.

The volume content of the β-type silicon nitride whisker in the composite material obtained was 18%. Also, when the distribution of the preform was observed by cutting the central portion of the composite material, as in Example 1, no shrinkage and deformation were observed.

Comparative Example 1

After the β-type silicon nitride whisker obtained in the same manner as in Example 1 was crushed into whiskers, the whiskers were dispersed in water to prepare a uniform dispersion, and subsequently, whiskers obtained by filtration of the dispersion were monoaxially pressed to prepare a preform 50 x 50 x 100 mm.

In the same manner as in Example 1, except for the preform used, a β-type silicon nitride whisker reinforced aluminum composite material with a whisker volume content of 13% was obtained.

When the distribution of the preform was observed by cutting the central portion of the composite material, as described in Example 1, shrinkage and deformation of the preform were observed as shown in Fig. 3.

A test strip 4 x 3 x 40 mm was cut out from the portion of the composite material containing the β-type silicon nitride whisker, and the flexural strength was measured by the same method as in Example 1. The results are also shown in Fig. 1.

## Claims

1. A process for preparing a β-type silicon nitride reinforced metal composite material comprising the steps of impregnating a molten metal matrix into a β-type silicon nitride whisker molding under a pressure followed by solidifying said β-type silicon nitride whisker molding having a density of 0.15 to 1.1 $g/cm^3$, a flexural strength of 25 $kg/cm^2$ or more, a hardness of 45 $kg/cm^2$ or more and a compression strength of 30 $kg/cm^2$ or more, said molding comprising 90% by weight or more of β-type silicon nitride whiskers wherein 80% by weight or more of said whiskers have a diameter of 0.1 to 5 μm and a length of 2 to 100 μm and said whiskers are mutually fixed to each other by contact therebetween at one or more site per whisker.

2. A process as claimed in claim 1, wherein said β-type silicon nitride whisker molding is prepared by formulating amorphous silicon nitride powder or α-type silicon nitride powder with oxide powder of at least one member of rare earth metal elements and alkaline earth metal followed by calcining the formulated product filled in a calcining vessel at a filling density of 0.15 to 1.1 $g/cm^3$ under a nitrogen-containing non-oxidative gas atmosphere.

3. A process as claimed in claim 1, wherein said molten metal matrix is derived from aluminum, magnesium, zinc, copper, nickel, iron, titanium and alloys based thereon.

4. A β-type silicon nitride whisker molding having a density of 0.15 to 1.1 $g/cm^3$, a flexural strength of 25 $kg/cm^2$ or more, a hardness of 45 $kg/cm^2$ or more and a compression strength of 30 $kg/cm^2$ or more, said molding comprising 90% by weight or more of β-type silicon nitride whiskers wherein 80% by weight or more of said whiskers have a diameter of 0.1 to 5 μm and a length of 2 to 100 μm, and said whiskers are mutually fixed to each other by contact therebetween at one or more site per whisker.

# Fig.1

O: EXAMPLE 1
X: COMPARATIVE EXAMPLE 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 170 396 (MITSUBISHI ALUMINIUM K.K.) * Abstract * | 1,3,4 | C 22 C 1/09 |
| A | EP-A-0 251 522 (UBE INDUSTRIES LTD) * Column 1, lines 13-18; abstract * | 2,4 | |
| A | PATENT ABSTRACTS OF JAPAN, vol. 12, no. 33 (C-472)[2880], 30th January 1988; & JP-A-62 182 235 (TOYOTA MOTOR CORP.) 10-08-1987 * Abstract * | 1 | |
| A | US-A-4 601 956 (DOHNOMOTO) * Column 11, line 56 - column 12, line 1 * | 1 | |
| A | DE-A-2 644 272 (HONDA GIKEN KOGYO K.K.) * Claims 1,3 * | 1 | |
| P,X | PATENT ABSTRACTS OF JAPAN, vol. 13, no. 39 (C-563)[3387], 27th January 1989; & JP-A-63 235 437 (UBE IND. LTD) 30-09-1988 * Abstract * | 4 | TECHNICAL FIELDS SEARCHED (Int. Cl.4)  C 22 C |

The present search report has been drawn up for all claims

| Place of search | Date of completion of the search | Examiner |
|---|---|---|
| THE HAGUE | 19-07-1989 | ASHLEY G.W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)